# EUROPÄISCHE PATENTSCHRIFT

(11) **EP 2 599 979 B1**
(45) Veröffentlichungstag und Bekanntmachung des Hinweises auf die Patenterteilung: **05.09.2018**
(21) Anmeldenummer: 12191714.0
(22) Anmeldetag: 08.11.2012
(51) Int. Cl.: F02C 6/12, F01D 25/16, F01D 25/18

(54) **Ladeeinrichtung**
Turbocharger
Turbocompresseur

(30) Priorität: 02.12.2011 DE 102011087628
(43) Veröffentlichungstag der Anmeldung: 05.06.2013
(73) Patentinhaber: BMTS Technology GmbH & Co. KG, 70376 Stuttgart (DE)
(72) Erfinder: Nguyen-Schäfer, Thanh-Hung, 71679 Asperg (DE); Haiser, Heinz Bernd, 71638 Ludwigsburg (DE); Knopf, Martin, 76534 Baden-Baden (DE)
(74) Vertreter: BRP Renaud & Partner mbB Rechtsanwälte Patentanwälte Steuerberater

(56) Entgegenhaltungen:
- EP-A1- 1 701 051
- DE-A1-102008 000 554
- DE-A1-102009 059 660
- GB-A- 2 335 713
- US-A1- 2005 196 085

## Beschreibung

Die vorliegende Erfindung betrifft eine Ladeeinrichtung, insbesondere einen Abgasturbolader, mit einer Welle, die mit Hilfe zumindest eines radialen Gleitlagers rotierbar gelagert ist. Die Erfindung betrifft zudem eine Welle für eine derartige Ladeeinrichtung.

Eine Ladeeinrichtung, insbesondere ein Abgasturbolader, weist zur Antriebsübertragung zwischen einem Turbinenrad und einem Verdichterrad eine Welle auf. Die Welle ist gewöhnlich in einem Lagergehäuse der Ladeeinrichtung angeordnet, wobei eine drehbare Lagerung der Welle mit einem radialen Gleitlager gewährleistet sein kann. Gewöhnlich sind zwei derartige Gleitlager vorgesehen, welche die Welle jeweils an axial beabstandeten Wellenlagerbereichen lagern. Zur Vermeidung bzw. Reduzierung von Verschleiß kann ein Schmierstoff, insbesondere Öl, im jeweiligen Wellenlagerbereich eingebracht werden.

Aus der GB 2 335 713 A ist eine Ladeeinrichtung mit einer luftgelagerten Welle bekannt. Die zum Lagern erforderliche Luft wird in einem Lagerabschnitt über eine Buchse zugeführt, in der die Welle aufgenommen ist. An der Außenseite der Welle sind zueinander beabstandete und gegenläufig verlaufende Nuten eingebracht.

Die DE 10 2008 000 554 A1 zeigt einen Abgasturbolader mit einer darin gelagerten Welle. Die Welle ist an einer Radiallagerfläche mit einer Beschichtung versehen, welche zwei Bereiche mit unterschiedlichen Dicken aufweist.

Nachteilig hierbei ist, dass es zwischen der Welle und dem Gleitlager, insbesondere bei niedrigen Drehzahlen bzw. Rotationen der Welle, trotzdem Reibung auftreten kann. Dies ist insbesondere beim Starten der Ladeeinrichtung und somit beim Starten der Rotation der Welle der Fall, weil dabei der Schmierstoff aus dem Wellenlagerbereich abgeströmt sein kann. Zudem weisen immer mehr Kraftfahrzeuge, in denen die Ladeeinrichtung angeordnet sein kann, eine sogenannte Start-Stopp-Funktion auf. Die Start-Stopp-Funktion dient dem Zweck, den Energieverbrauch des Kraftfahrzeugs, insbesondere den Kraftstoffverbrauch, zu senken, wobei eine Brennkraftmaschine des Kraftfahrzeugs, an welcher die Ladeeinrichtung üblicherweise angeordnet ist, bei Ruhephasen des Kraftfahrzeugs, etwa beim Halten an einer Verkehrsampel, kurzzeitig abgeschaltet wird. Dementsprechend wird auch die Ladeeinrichtung abgeschaltet und anschließend wieder gestartet. Folglich tritt bei Fahrzeugen mit besagter Start-Stopp-Funktion eine erhöhte Reibung zwischen der Welle und dem Gleitlager und somit ein erhöhter Verschleiß auf.

Die vorliegende Erfindung beschäftigt sich mit dem Problem, für eine Ladeinrichtung, insbesondere einem Abgasturbolader, vorzugsweise einer Brennkraftmaschine, eine verbesserte oder zumindest alternative Ausführungsform anzugeben, die sich insbesondere durch eine verringerte Reibung zwischen einer Welle und einem Gleitlager und/oder einen reduzierten Verschleiß auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, die Oberfläche einer Welle einer Ladeeinrichtung in einem Wellenlagerbereich, in dem ein radiales Gleitlager die Welle rotierbar lagert, mit einer Mikrostrukturierung zu versehen und somit eine Reibung zwischen der Welle und dem Gleitlager, insbesondere im Wellenlagerbereich, zu reduzieren. Hierbei wird die Kenntnis genutzt, dass eine Mikrostruktur, die üblicherweise Dimensionen von einigen µm aufweist, in der Lage ist, einen sich zwischen der Welle und dem Gleitlager im Wellenlagerbereich befindenden Schmierstoff zu speichern, so dass Schmierstoff bei einem Stillstand der Welle im Wellenlagerbereich verbleiben kann. Dementsprechend kann dieser Schmierstoff beim nächsten Starten der Welle unmittelbar zur Reibungsreduzierung verwendet werden, insbesondere bevor zusätzlicher Schmierstoff in den Wellenlagerbereich eingebracht wird.

Die Ladeeinrichtung, die insbesondere als Abgasturbolader ausgebildet sein kann, weist die Welle auf, welche mit Hilfe zumindest eines derartigen radialen Gleitlagers rotierbar gelagert ist. Hierbei erfolgt die jeweilige Lagerung im Wellenlagerbereich, welcher insbesondere einem Kontaktbereich zwischen der Welle und dem zugehörigen Gleitlager entspricht. Zur Reduzierung der Reibung zwischen der Welle und dem Gleitlager ist der Schmierstoff vorgesehen, der durch eine Strömungsöffnungen oder mehreren Strömungsöffnungen dem Wellenlagerbereich zugeführt bzw. vom Wellenlagerbereich abgeführt wird. Der Schmierstoff ist vorzugsweise ein Schmieröl, weswegen im Folgenden der Begriff Öl statt Schmierstoff verwendet wird.

Dem Erfindungsgedanken entsprechend weist die Welle im Wellenlagerbereich drei Abschnitte auf. Hierbei begrenzen zwei in einer Umfangsrichtung verlaufende Außenabschnitte einen ebenfalls in der Umfangsrichtung verlaufenden Innenabschnitt axial. Die Umfangsrichtung bezieht sich auf die Welle, so dass die jeweiligen Abschnitte die Welle im Wellenlagerbereich mantelförmig umschließen können. Der jeweilige Wellenlagerbereich weist also einen Innenabschnitt auf, der in axial nach außen verlaufender Richtung von jeweils einem derartigen Außenabschnitt begrenzt ist. Bevorzugt ist der Innenabschnitt mittig bzw. zentral im Wellenlagerbereich angeordnet. Zudem weisen die Außenabschnitte die gleiche Größe und/oder Form auf. Zumindest einer der Abschnitte weist an seiner Oberfläche mindestens eine Mikrostruktur auf. Die jeweilige Mikrostruktur ist bevorzugt eine Ausnehmung bzw. Aussparung, die typischerweise Dimensionen, das heißt eine Länge, eine Breite sowie eine Tiefe, im Bereich von Mikrometern, höchsten jedoch 100 µm aufweist. Alternativ kann die jeweilige Mikrostruktur als ein Vorsprung ausgebildet sein, wobei dann die Vertiefungen zwischen den jeweiligen Vorsprüngen zur Speicherung des Öls dienen können. Die Mikrostrukturierung weist dabei zumindest zwei derartige Mikrostrukturen auf, wobei die Mikrostrukturen unterschiedliche Größen und/oder Formen aufweisen können oder identisch sein können.

Bevorzugt sind Ausführungsformen, bei denen zumindest einer der Außenabschnitte, bevorzugt jedoch beide, Mikrostrukturen aufweisen, die entlang der gesamten Umfangsrichtung im zugehörigen Außenabschnitt angeordnet sind. Denkbar sind jedoch auch Ausführungsformen, bei denen die Mikrostrukturierung nur in einem Teil des zugehörigen Außenabschnitts angeordnet ist, wobei die jeweiligen Mikrostrukturen auch zylinderförmig bzw. ringförmig auf dem jeweiligen Außenabschnitt angeordnet sein können.

Der Innenabschnitt kann insbesondere dem Zweck dienen, das von der Strömungsöffnung herströmende Öl im Wellenlagerbereich zu verteilen. Dementsprechend kann die jeweilige Strömungsöffnung im Gleitlager ausgebildet bzw. diesem zugeordnet sein. Das Öl strömt also durch die Strömungsöffnung zum Innenabschnitt und wird durch die Rotation der Welle innerhalb des Wellenlagerbereichs verteilt, wobei die Mikrostrukturierung bzw. die jeweilige Mikrostruktur dem Zweck dient, einen Teil dieses Öls beim Stillstand der Welle, das heißt bei einem Zustand, in dem sich die Welle nicht dreht, zu speichern, so dass es nicht über die zugehörige Strömungsöffnung hinausströmen kann. Dieses gespeicherte Öl steht beim nächsten bzw. anschließenden Starten der Welle von Anfang an zur Reduzierung der Reibung zwischen der Welle und dem Gleitlager zur Verfügung.

Der Innenabschnitt kann auch zumindest eine solche Mikrostruktur aufweisen, wobei Ausführungsformen bevorzugt sind, bei denen der Innenabschnitt in einem entlang der Umfangsrichtung verlaufenden Bereich, der vorzugsweise mittig im Wellenlagerbereich angeordnet ist, keine derartige Mikrostruktur aufweist.

Gemäß einer bevorzugten Ausführungsform verläuft die Tiefe der Mikrostruktur entlang einer Strukturlinie asymmetrisch. Das heißt insbesondere, dass die Tiefe entlang der Strukturlinie einen von der Mitte der Mikrostruktur verschobenen Maximalwert aufweist. Mit anderen Worten, eine Maximaltiefe der Mikrostruktur ist entlang der Strukturlinie nicht mittig in der Mikrostruktur ausgebildet, wobei die Maximaltiefe insbesondere nach innen, das heißt in Richtung des Innenabschnitts bzw. in Richtung der Mitte des Wellenlagerbereichs versetzt angeordnet bzw. ausgebildet ist. Die Strukturlinie gibt hierbei insbesondere eine Richtung vor, in der mehrere Mikrostrukturen hintereinander angeordnet sind. Die Orientierung der Strukturlinie weist eine Axialkomponente und eine Umfangskomponente auf. Die Axialkomponente verläuft parallel zur Axialrichtung der Welle und somit parallel zur Rotationsachse der Welle, während die Umfangskomponente entlang der Umfangsrichtung der Welle verläuft. Da die Umfangsrichtung der Welle eine Krümmung aufweist, ist die Strukturlinie entsprechend der Oberfläche der Welle gekrümmt. Die Strukturlinie kann also insbesondere schraubenförmig verlaufen. Die Strukturlinie kann ferner einer Strömungsrichtung des Öls bei sich drehender Welle entsprechen. Vorzugsweise entspricht die Axialkomponente der Strukturlinie der Axialkomponente der Strömungsrichtung des Öls bei sich drehender Welle. Hierbei wird die Kenntnis genutzt, dass ein derartiger Tiefenverlauf der Mikrostruktur als eine Rampe für das Öl dienen kann, die das Öl bei der Rotation der Welle und aufgrund der bei der Rotation der Welle herrschenden Kräfte, insbesondere Fliehkräfte, weg von der Welle und in Richtung des Gleitlagers drückt, so dass zwischen der Welle und dem Gleitlager ein Ölfilm gebildet wird, der die Reibung zwischen der Welle und dem Gleitlager von Anfang an verhindert oder zumindest reduziert.

Die Bildung des Ölfilms unmittelbar nach dem Start der Welle kann dadurch verbessert bzw. verstärkt werden, dass mehrere, vorzugsweise alle, Mikrostrukturen eine derartige rampenartige Ausbildung aufweisen, bei der die Tiefe entlang der Strukturlinie asymmetrisch verläuft und bei der insbesondere die Maximaltiefe nach innen verschoben ausgebildet ist. Die Tiefe kann entlang einer quer zur Strukturlinie verlaufenden Richtung eine beliebige Form aufweisen, wobei sie entlang dieser Richtung symmetrisch verlaufen kann, so dass die Maximaltiefe entlang dieser Richtung mittig bzw. zentral ausgebildet ist. Die Maximaltiefe beträgt vorzugsweise weniger als 10 µm und insbesondere etwa 5 µm.

Bei einer weiteren vorteilhaften Ausführungsform ist die Mikrostruktur länglich ausgebildet und weist dementsprechend eine Länge auf, die größer ist als eine Breite der Mikrostruktur. Vorzugsweise ist die Mikrostruktur derart auf dem zugehörigen Abschnitt ausgebildet, dass die Länge parallel zur zugehörigen Strukturlinie verläuft. Das heißt, dass die Tiefe der Mikrostruktur entlang der Länge bzw. im Längsschnitt asymmetrisch verlaufen kann während die Tiefe entlang der Breite bzw. im Querschnitt symmetrisch verlaufen kann. Die Maximaltiefe der Mikrostruktur ist bevorzugt im Bereich zwischen einem Viertel und einem Drittel der Länge ausgebildet. Somit nimmt die Länge bis zu diesem Bereich stark zu und anschließend weniger stark ab.

Das Verhältnis zwischen der Länge und der Breite kann zwischen 2:1 und 3:1 liegen. Die Länge kann insbesondere zwischen 15 bis 30 µm betragen, Dementsprechend beträgt die Breite zwischen 5 µm und 15 µm. Bevorzugt weist die Mikrostruktur eine Länge von etwa 20 µm auf, während die Breite etwa 10 µm beträgt.

Bei einer weiteren vorteilhaften Ausgestaltung sind zumindest zwei Mikrostrukturen eines der Abschnitte einander benachbart angeordnet, wobei die benachbarte Anordnung vorzugsweise an den Längsenden der Mikrostrukturen realisiert ist. Das heißt, dass diese Mikrostrukturen an ihren Längsenden einander benachbart angeordnet sind, wobei zugehörige Längsenden einander gegenüberliegen.

Gemäß einer weiteren vorteilhaften Variante sind zumindest zwei Mikrostrukturen eines der Abschnitte an ihren Längsenden auf einer Strukturlinie der besagten Art benachbart angeordnet. Das heißt, dass die Mikrostrukturen länglich auf der Strukturlinie angeordnet sind, wobei zugehörige Längsenden einander gegenüberliegen. Die zugehörigen Längsenden können sich hierbei kontaktieren. Sind mehrere Mikrostrukturen derart auf der Strukturlinie angeordnet, so ist der zugehörige Abschnitt entlang der Strukturlinie nutenartig ausgebildet, wobei die nutenartige Ausbildung mittels voneinander getrennt angeordneten Mikrostrukturen realisiert ist. Die benachbarte Anordnung der Mikrostrukturen auf der Strukturlinie führt einerseits zu einer Verstärkung des Rampeneffekts bzw. zu einer verbesserten Bildung des Ölfilms beim Starten der Welle und andererseits dazu, dass eine erhöhte Anzahl an Mikrostrukturen auf den zugehörigen Abschnitt angeordnet werden können und somit mehr Öl gespeichert werden kann.

Hierzu können auch mehrere derartige Strukturlinien auf einem der Abschnitte vorgesehen sein, entlang welchen Mikrostrukturen, vorzugsweise an ihren Längsenden, benachbart angeordnet sind. Dabei sind die Strukturlinien eines solches Abschnittes insbesondere in der Umfangsrichtung benachbart angeordnet. Bevorzugt sind ferner Ausführungsformen, bei denen der jeweilige Abschnitt äquidistant verlaufende Strukturlinien aufweist. Das heißt, dass die Strukturlinien des zugehörigen Abschnittes die gleiche axiale Komponente und die gleiche Umfangskomponente aufweisen. Weisen alle Mikrostrukturen des Abschnitts die gleiche Größe und Form auf, so können diese somit entlang der zugehörigen Strukturlinie und quer zur zugehörigen Strukturlinien äquidistant angeordnet werden.

Bei einer vorteilhaften Ausführungsform weist zumindest eine solche Strukturlinie des einen Außenabschnitts eine andere Axialkomponente auf als zumindest eine solche Strukturlinie des anderen Außenabschnitts. Vorzugsweise weist die Strukturlinie des einen Außenabschnitts eine Axialkomponente auf, die der Axialkomponente der Strukturlinie des anderen Außenabschnitts entgegengerichtet ist. Diese andere, insbesondere entgegengesetzte Ausrichtung der Strukturlinien gilt bevorzugt für alle Strukturlinien der jeweiligen Außenabschnitte. Das heißt, dass der eine Außenabschnitt bezüglich einer in der Radialrichtung liegenden Ebene dem Spiegelbild des anderen Außenabschnittes entsprechen kann, sofern die Außenabschnitte und die zugehörigen Mikrostrukturen die gleiche Größe und Form aufweisen. Bevorzugt verlaufen die Axialkomponenten hierbei von innen nach außen, d.h. vom Innenabschnitt in Richtung des zugehörigen Außenabschnitts.

Bevorzugt sind Ausführungsformen, bei denen zumindest eine solche Mikrostruktur des Innenabschnitts auf der Strukturlinie eines der Außenabschnitte angeordnet ist. Weist der Innenbereich mehrere Mikrostrukturen auf, so sind Ausführungsformen vorstellbar, bei denen der Innenabschnitt Mikrostrukturen aufweist, die jeweils auf einer solchen Strukturlinien des einen Außenabschnitts oder des anderen Außenabschnitts angeordnet sind. Diese Mikrostrukturen sind dementsprechend als eine Fortsetzung der zugehörigen Mikrostrukturierung des jeweiligen Außenabschnittes im Innenabschnitt ausgebildet.

Eine alternative Realisierung des Rampeneffekts ist dadurch gegeben, dass die Tiefe, insbesondere die Maximaltiefe, von entlang der Strukturlinie benachbarten Mikrostrukturen entlang dieser Strukturlinie abnimmt, wobei die Abnahme der Tiefe insbesondere von innen nach außen gegeben ist. Hierbei ist der asymmetrische Verlauf der Tiefe der jeweiligen Mikrostruktur nicht zwingend notwendig. Das heißt, dass die jeweilige Mikrostruktur eine konstante Tiefe und/oder einen symmetrischen Tiefenverlauf aufweisen kann, wobei die Tiefe bzw. die Maximaltiefe von entlang der Strukturlinie benachbarten Mikrostrukturen von innen nach außen abnimmt. Denkbar ist auch, die entlang der Strukturlinie angeordneten Mikrostrukturen derart auszubilden, dass mehrere benachbarte Mikrostrukturen die gleiche Tiefe, insbesondere Maximaltiefe, und/oder den gleichen Tiefenverlauf aufweisen, während mehrere andere und diesen entlang der Strukturlinie benachbarte Mikrostrukturen eine andere Tiefe, insbesondere Maximaltiefe, und/oder einen anderen Tiefenverlauf aufweisen. Hierbei kann die Tiefe, insbesondere die Maximaltiefe, der entlang der Strukturlinie benachbarten Mikrostrukturen bzw. Mikrostrukturgruppen insbesondere von 6 µm auf 2 µm abnehmen.

Zur Reduzierung der Reibung zwischen der Welle und dem Gleitlager kann eine Kante der jeweiligen Mikrostruktur eine Abkantung bzw. eine Abrundung aufweisen. Es ist auch vorstellbar, die Kante der Mikrostruktur mit einem Kantenbruch zu versehen und somit die Reibung zwischen der Welle und dem Gleitlager zu reduzieren bzw. die Strömung des Öls im Wellenlagerbereich zu verbessern.

Es versteht sich, dass die Mikrostruktur eine beliebige Form aufweisen kann, sofern die Länge, die Breite sowie die Tiefe einen Wert im Mikrometerbereich aufweisen. Insbesondere kann die Mikrostruktur in einer Draufsicht eine Außenkontur aufweisen, die kreisförmig, oval, rechteckig, trapezförmig oder dreieckförmig ausgebildet ist.

Die Mikrostruktur bzw. die Mikrostrukturierung kann auf beliebige Art realisiert sein. Die jeweilige Mikrostruktur kann insbesondere mit Hilfe eines Lasers bzw. durch ein Laserverfahren hergestellt sein. Vorteilhaft bei der Verwendung eines Lasers bzw. eines Laserverfahrens ist eine präzise Ausbildung der jeweiligen Mikrostruktur sowie die Möglichkeit, die jeweilige Mikrostruktur möglichst klein, hier also im Bereich von einigen wenigen Mikrometern, auszubilden.

Es versteht sich, dass die Welle der erfindungsgemäßen Ladeeinrichtung als wichtiger Bestandteil der vorliegenden Erfindung auch als Solche zum Umfang dieser Erfindung gehört.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen Schnitt durch eine Ladeeinrichtung,
- Fig. 2: eine abgerollte Ansicht der Ladeeinrichtung,
- Fig. 3: eine Draufsicht auf eine Mikrostruktur,
- Fig. 4: einen Querschnitt durch die Mikrostruktur,
- Fig. 5: einen Längsschnitt durch die Mikrostruktur,
- Fig. 6 und 7: eine Anordnung von Mikrostrukturen, jeweils unterschiedlicher Ausführungsform.

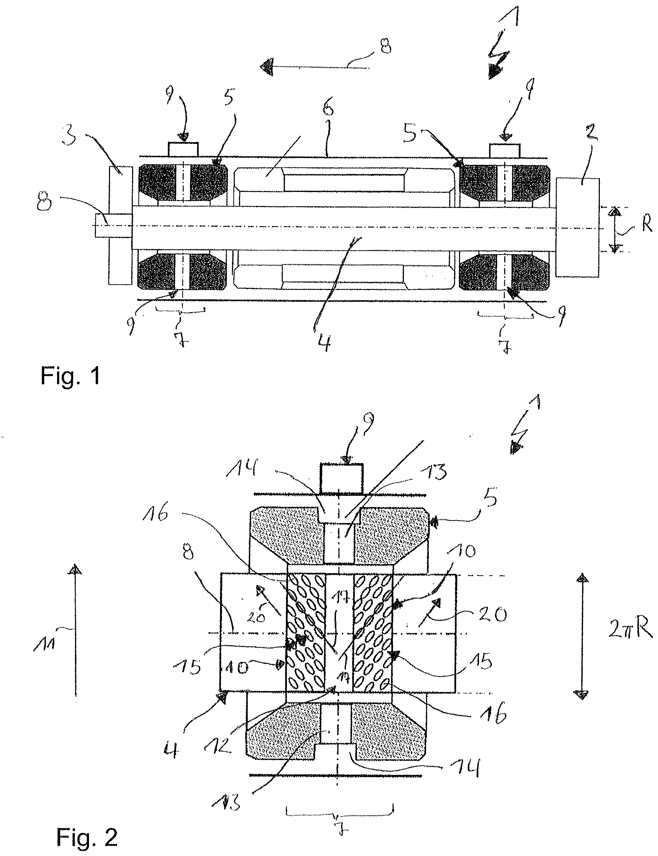

Entsprechend Fig. 1 weist eine Ladeeinrichtung 1, die insbesondere als Abgasturbolader 1 ausgebildet ist, ein Turbinenrad 2 sowie ein Verdichterrad 3 auf, die mit Hilfe einer Welle 4 antriebsverbunden sind. Hierzu ist die Welle 4 mit Hilfe zumindest eines radialen Gleitlagers 5 drehbar in einem Lagergehäuse 6 der Ladeeinrichtung 1 angeordnet. Beim hier gezeigten Beispiel sind dabei zwei derartige radiale Gleitlager 5 vorgesehen, die die Welle 4 an axial voneinander beabstandeten Wellenlagerbereichen 7 drehbar lagern. Die mit einem Pfeil 8 angedeutete Axialrichtung ist hierbei bezüglich der Welle 4 gegeben und entspricht folglich der Rotationsachse 8 der Welle 4. Zur Reduzierung der Reibung zwischen der Welle 4 und dem jeweiligen Gleitlager 5 sind im jeweiligen Gleitlager 5 zwei Strömungsöffnungen 9 an radial gegenüberliegenden Seiten des jeweiligen Gleitlagers 5 ausgebildet, die einen Schmierstoff, insbesondere Öl, im jeweiligen Wellenlagerbereich 7 zwischen der Welle 4 und dem jeweiligen Gleitlager 5 zuführen bzw. abführen. Die Welle 4 weist darüber hinaus axial entlang des gesamten jeweiligen Wellenlagerbereichs 7 einen konstanten Durchmesser R auf.

Fig. 2 zeigt eine abgerollte Ansicht der Ladeeinrichtung 1 im Bereich eines der Wellenlagerbereiche 7. Abgerollt heißt hierbei, dass die Darstellung eine Projektion des gesamten Umfangs der Welle 4 zeigt, so dass die senkrecht zur Axialrichtung 8 verlaufende Ausdehnung der Welle 4 dem Umfang 2πR der Welle 4 entspricht. Die Welle 4 weist im Wellenlagerbereich 7 zwei Außenabschnitte 10 auf, die sich entlang der gesamten und mit einem Pfeil 11 angedeuteten Umfangsrichtung erstrecken und die Welle 4 somit entlang der Umfangsrichtung 11 gänzlich umschließen. Die Außenabschnitte 11 begrenzen einen Innenabschnitt 12 im Wellenlagerbereich 7 axial, der sich ebenfalls entlang der gesamten Umfangsrichtung 11 erstreckt. Die beiden Außenabschnitte 10 sind gleich ausgebildet und weisen die gleiche Größe und Form auf. Der Innenabschnitt 12 ist kleiner ausgebildet und mittig im Wellenlagerbereich 7 angeordnet, so dass der Innenabschnitt 12 parallel zu Kanälen 13 des Gleitlagers 5 verläuft, welche den Innenabschnitt 12 über eine Ringnut 14 des Gleitlagers 5, die entlang der gesamten Umfangsrichtung 11 verläuft und fluidisch mit den Strömungsöffnungen 9 verbunden ist, mit einem Schmierstoff, insbesondere Öl versorgt.

Der jeweilige Außenabschnitt 12 weist auf seine Oberfläche eine Mikrostrukturierung 15 auf, die auf der Oberfläche des zugehörigen Außenabschnitts 10 entlang der gesamten Umfangsrichtung 11 verläuft. Die jeweilige Mikrostrukturierung 15 weist mehrere Mikrostrukturen 16 auf. Die Mikrostrukturen 16 der jeweiligen Außenabschnitte 10 weisen eine längliche, fishbone-artige, Form auf, wobei die Mikrostrukturen 16 der Länge nach auf Strukturlinien 17 angeordnet sind. Das heißt, dass die länglich ausgebildeten Mikrostrukturen 16 an ihren Längsenden einander benachbart entlang zugehörigen Strukturlinien 17 angeordnet sind. Die jeweilige Strukturlinie 17 weist dabei eine entlang der Axialrichtung 8 verlaufende Axialkomponente sowie eine entlang der Umfangsrichtung 11 verlaufende Umfangskomponente auf. Somit weist die Strukturlinie 17 lediglich in der hier gezeigten Projektion einen geraden Verlauf auf und ist auf der Welle entsprechend der gekrümmten Oberfläche der Welle 4 gekrümmt geformt. Die Strukturlinien 17 der jeweiligen Außenabschnitte 10 verlaufen bei der gezeigten Ausführungsform äquidistant, wobei die Axialkomponenten der Strukturlinien 17 des einen Außenabschnitts 10 in die im Vergleich zur Axialkomponente der Strukturlinien 17 des anderen Außenabschnitts 10 entgegengesetzte Axialrichtung 8 verläuft. Zudem sind die Mikrostrukturen 16 der beiden Außenabschnitte 10 in der gezeigten Darstellung gleich ausgebildet, so dass der eine Außenabschnitt 10 dem Spiegelbild des anderen Außenabschnitts 10 bezüglich einer mittig im Innenabschnitt 12 radial verlaufenden Ebene entspricht. Hierbei verlaufen die Strukturlinien 17 insbesondere parallel zu einer Strömungsrichtung 20 des jeweiligen Außenabschnitts 10, die sich bei einer Rotation der Welle 4 entgegen der gezeigten Umfangsrichtung 11 ergibt.

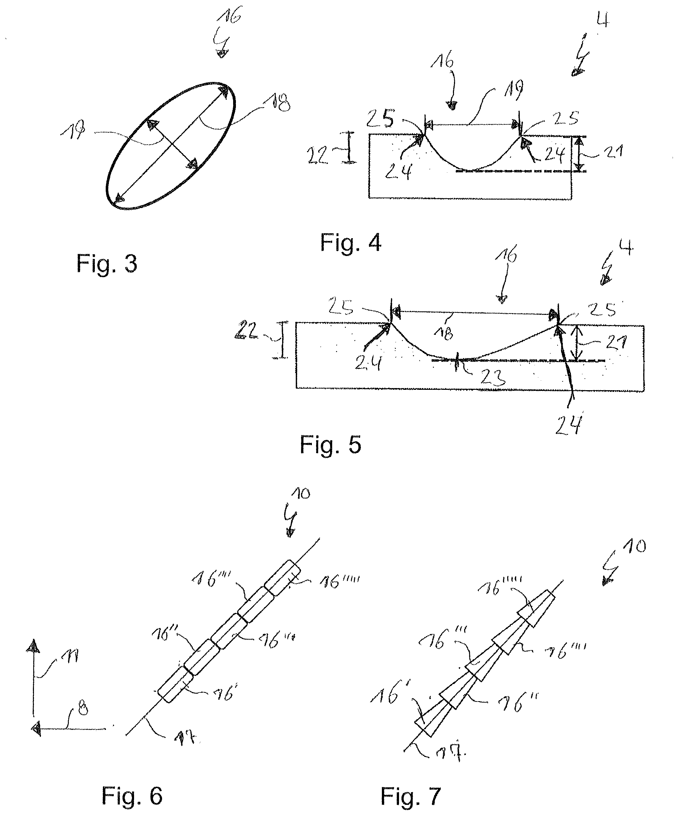

Fig. 3 zeigt eine solche Mikrostruktur 16. Die längliche Mikrostruktur 16 weist eine Länge 18 und eine senkrecht zur Länge 18 verlaufenden Breite 19 auf, wobei die Länge 18 im Vergleich zur Breite 19 im Verhältnis von ca. 2:1 ausgebildet ist und einen Wert von beispielsweise 20 µm aufweist, während die Breite einen Wert von 10 µm aufweist. Bei der in Fig. 2 gezeigten Ausführungsform verläuft die Länge 18 der Mikrostrukturen 16 also entlang der zugehörigen Strukturlinie 17.

Fig. 4 zeigt einen Querschnitt durch die in Fig. 3 gezeigte Mikrostruktur 16. Im Querschnitt, das heißt entlang der Breite 19, weist die Mikrostruktur 16 eine Maximaltiefe 21 auf, wobei die Tiefe 22 der Mikrostruktur 16 entlang der Breite 19 symmetrisch verläuft, so dass die Maximaltiefe 21 bezüglich der Breite 19 mittig ausgebildet ist.

Ein Längsschnitt der in den Fig. 3 und 4 gezeigten Mikrostruktur 16 ist in Fig. 5 gezeigt. Die Tiefe 22 weist entlang der Länge 18 einen asymmetrischen Verlauf auf. Dabei ist die Maximaltiefe 21 von einer Längsmitte 23 der Mikrostruktur 16 nach innen, das heißt in Richtung des Innenabschnitts 12 verschoben. Entlang der Länge 18 bildet die Mikrostruktur 16 folglich eine rampenartige Form auf, um das sich in der Mikrostruktur 16 befindliche Öl bei der Drehung der Welle 4 vereinfacht aus der Mikrostruktur 16 hinaus und gegen das Gleitlager 5 zu drücken und somit einen Ölfilm zwischen der Welle 4 und dem Gleitlager 5 zu bilden.

Wie in den Fig. 4 und 5 sichtbar, weist eine Kante 24 der Mikrostruktur 16 eine Abkantung 25', eine Abrundung 25" oder einen Kantenbruch 25'" auf, um die Reibung zwischen der Welle 4 und dem Gleitlager 5 zusätzlich zu verringern.

Die Fig. 6 und 7 zeigen alternative Möglichkeiten um besagten Rampeneffekt zu erzeugen, wobei hier ebenfalls die abgerollte Ansicht zu sehen ist. Bei der in Fig. 6 gezeigten Ausführungsform sind die Mikrostrukturen 16 entlang der Strukturlinie 17 und an den Längsenden einander direkt benachbart angeordnet. Die Maximaltiefe 21 von einander benachbarten Mikrostrukturen 16 nimmt dabei bevorzugt entlang der Strukturlinie 17 von innen nach außen ab. Das heißt insbesondere, dass die Maximaltiefe 21 der in der gezeigten Darstellung unterste Mikrostruktur 16' 6 µm betragen kann, während die Maximaltiefe 21 der obersten Mikrostruktur 16"'" 2 µm betragen kann. Hierbei kann die Abnahme der Maximaltiefe 21 gleichmäßig verlaufen. Das heißt, dass die Maximaltiefe 21 der Mikrostruktur 16" 5 µm, die Maximaltiefe 21 der Mikrostruktur 16"' 4 µm und die Maximaltiefe der Mikrostruktur 16"" 3 µm betragen kann. Im Vergleich zu den in den Fig. 2 bis 5 gezeigten Mikrostrukturen 16 weisen die in Fig. 6 gezeigten Mikrostrukturen 16 eine rechteckige Form mit abgerundeten Ecken auf.

Die in Fig. 7 gezeigten Mikrostrukturen 16 unterscheiden sich von den in der Fig. 6 gezeigten Mikrostrukturen 16 lediglich in der Form. Die hier dargestellten Mikrostrukturen 16 weisen eine trapezartige Form auf, wobei sich jeweils ein schmales Längsende und ein langes Längsende direkt benachbart sind.

## Patentansprüche

1. Ladeeinrichtung (1), insbesondere Abgasturbolader (1), mit einer mit Hilfe zumindest eines radialen Gleitlagers (5) rotierbar gelagerten Welle (4), wobei
- die Welle (4) in einem Wellenlagerbereich (7) am Gleitlager (5) gelagert ist,
- die Welle (4) im Wellenlagerbereich (7) zwei jeweils in einer Umfangsrichtung (11) verlaufende Außenabschnitte (10) aufweist, die einen Innenabschnitt (12) axial begrenzen,
- zumindest eine Strömungsöffnung (9) zum Einbringen und/oder Abführen eines Schmierstoffs am Wellenlagerbereich (7) vorgesehen ist,
**dadurch gekennzeichnet,**
- **dass** zumindest einer der Außenabschnitte (10) an seiner Oberfläche mindestens eine Mikrostruktur (16) zum Speichern des sich zwischen der Welle (4) und dem Gleitlager (5) im Wellenlagerbereich (7) befindenden Schmierstoffs umfasst.

2. Ladeeinrichtung nach Anspruch 1,
**dadurch gekennzeichnet,**
**dass** eine Tiefe (22) der Mikrostruktur (16) entlang einer Strukturlinie (17) asymmetrisch verläuft, die eine Axialkomponente und eine Umfangskomponente aufweist, wobei die Axialkomponente parallel zur Axialrichtung (8) der Welle (4) und die Umfangskomponente entlang der Umfangsrichtung (11) der Welle (4) verläuft

3. Ladeeinrichtung nach Anspruch 2,
**dadurch gekennzeichnet,**
**dass** eine Maximaltiefe (21) der Mikrostruktur (16) entlang der Strukturlinie (17) nach innen versetzt ausgebildet ist.

4. Ladeeinrichtung nach 2 oder 3,
**dadurch gekennzeichnet,**
**dass** die Mikrostruktur (16) länglich ausgebildet ist, wobei eine Länge (18) der Mikrostruktur (16) parallel zur Strukturrichtung (17) verläuft.

5. Ladeeinrichtung nach Anspruch 4,
**dadurch gekennzeichnet,**
**dass** die Länge (18) zu einer quer zur Länge (18) verlaufenden Breite (19) der Mikrostruktur (16) im Verhältnis zwischen 2:1 bis 3:1 aufweist.

6. Ladeeinrichtung nach einem der Ansprüche 2 bis 5,
**dadurch gekennzeichnet,**
**dass** zumindest zwei Mikrostrukturen (16) eines der Außenabschnitte (10) an ihren Längsenden auf einer solchen Strukturlinie (17) benachbart angeordnet sind.

7. Ladeeinrichtung nach einem der Ansprüche 2 bis 6,
**dadurch gekennzeichnet,**
**dass** zumindest einer der Außenabschnitte (10) zwei solche Strukturlinien (17) aufweist, die insbesondere äquidistant verlaufen.

8. Ladeeinrichtung nach einem der Ansprüche 2 bis 7,
**dadurch gekennzeichnet,**
**dass** der Innenabschnitt (12) zumindest eine solche Mikrostruktur (16) aufweist, die insbesondere auf einer der Strukturlinien (17) einer der Außenabschnitte (10) angeordnet ist.

9. Ladeeinrichtung nach Anspruch 2 bis 8,
**dadurch gekennzeichnet,**
**dass** die Strukturlinie (17) des einen Außenabschnitts (10) eine andere, insbesondere entgegengesetzte, Axialkomponente aufweist, als die Strukturlinie (17) des anderen Außenabschnitts (10).

10. Ladeeinrichtung nach einem der Ansprüche 6 bis 9,
**dadurch gekennzeichnet,**
**dass** die Tiefe (22), insbesondere die Maximaltiefe (21), von entlang der Strukturlinie (17) benachbarten Mikrostrukturen (16) von innen nach außen abnimmt.

11. Ladeeinrichtung nach einem der Ansprüche 1 bis 10,
**dadurch gekennzeichnet,**
**dass** die Mikrostruktur (16) mit einem Laserverfahren hergestellt ist.

12. Ladeeinrichtung nach einem der Ansprüche 1 bis 11,
**dadurch gekennzeichnet,**
**dass** die jeweilige Mikrostruktur (16) eine gekrümmte oder eckige oder trapezförmige oder ovale Form aufweist.

13. Ladeeinrichtung nach einem der Ansprüche 1 bis 12,
**dadurch gekennzeichnet,**
**dass** eine Kante (24) der Mikrostruktur (16) eine Abkantung (25'), eine Abrundung (25") oder einen Kantenbruch (25"') aufweist.

14. Ladeeinrichtung nach einem der Ansprüche 1 bis 13,
**dadurch gekennzeichnet,**
**dass** das Gleitlager (5) eine mit der Strömungsöffnung (9) fluidisch verbundene Ringnut (14) aufweist, die im Bereich des Innenabschnitts (12) in Umfangsrichtung (11) verläuft.

## Claims

1. Charging device (1), more particularly exhaust gas turbocharger (1), with a shaft (4) rotatably mounted with the help of at least one radial slide bearing (5), wherein
- the shaft (4) is mounted in a shaft bearing area (7) on the slide bearing (5),
- the shaft (4) has two outer sections (10) in the shaft bearing area (7), each running in a circumferential direction (11) and axially limiting an inner section (12),
- at least one flow opening (9) is provided for the introduction and/or removal of a lubricant in the shaft bearing area (7),
**characterised in that**
- at least one of the outer sections (10) comprises on its surface at least one microstructure (16) for storing the lubricant present between the shaft (4) and the slide bearing (5) in the shaft bearing area (7).

2. Charging device according to claim 1,
**characterised in that**
a depth (22) of the microstructure (16) runs asymmetrically along a structural line (17), having an axial component and a circumferential component, wherein the axial component runs parallel to the axial direction (8) of the shaft (4) and the circumferential component runs along the circumferential direction (11) of the shaft (4)

3. Charging device according to claim 2,
**characterised in that**
a maximum depth (21) of the microstructure (16) is configured inwardly offset along the structural line (17).

4. Charging device according to 2 or 3,
**characterised in that**
the microstructure (16) is configured in an elongated form, wherein a length (18) of the microstructure (16) runs parallel to the structural direction (17).

5. Charging device according to claim 4,
**characterised in that**
the ratio of the length (18) in relation to a width (19) of the microstructure (16) running perpendicular to the length (18) is between 2:1 and 3:1.

6. Charging device according to any one of claims 2 to 5,
**characterised in that**
at least two microstructures (16) of one of the outer sections (10) are arranged, on their longitudinal ends, adjacent to such a structural line (17).

7. Charging device according to any one of claims 2 to 6,
**characterised in that**
at least one of the outer sections (10) has two such structural lines (17), which more particularly run equidistantly.

8. Charging device according to any one of claims 2 to 7,
**characterised in that**
the inner section (12) has at least one such microstructure (16), which more particularly is arranged on one of the structural lines (17) of one of the outer sections (10).

9. Charging device according to claim 2 to 8,
**characterised in that**
the structural line (17) of the one outer section (10) has an axial component that is different from, more particularly opposite to, the structural line (17) of the other outer section (10).

10. Charging device according to any one of claims 6 to 9,
**characterised in that**
the depth (22), more particularly the maximum depth (21), of adjacent microstructures (16) along the structural line (17) decreases from the inside to the outside.

11. Charging device according to any one of claims 1 to 10,
**characterised in that**
the microstructure (16) is manufactured using a laser technique.

12. Charging device according to any one of claims 1 to 11,
**characterised in that**
the particular microstructure (16) has a curved or angular or trapeziform or oval shape.

13. Charging device according to any one of claims 1 to 12,
**characterised in that**
one edge (24) of the microstructure (16) is folded over (25'), rounded (25") or broken (25"').

14. Charging device according to any one of claims 1 to 13,
**characterised in that**
the slide bearing (5) has an annular groove (14) fluidly connected with the flow opening (9), said annular groove running in circumferential direction (11) in the area of the inner section (12).

## Revendications

1. Dispositif de chargement (1), en particulier turbocompresseur à gaz d'échappement (1), avec un arbre (4) logé de manière à pouvoir tourner à l'aide d'au moins un palier à glissement (5) radial, dans lequel
- l'arbre (4) est logé dans une zone de palier d'arbre (7) sur le palier à glissement (5),
- l'arbre (4) dans la zone de palier d'arbre (7) présente deux sections extérieures (10) s'étendant respectivement dans un sens périphérique (11) qui délimitent axialement une section intérieure (12),
- au moins une ouverture d'écoulement (9) est prévue pour l'introduction et/ou l'évacuation d'un lubrifiant sur la zone de palier d'arbre (7),
**caractérisé en ce**
- **qu'**au moins une des sections extérieures (10) comporte sur sa surface au moins une microstructure (16) pour le stockage du lubrifiant se trouvant entre l'arbre (4) et le palier à glissement (5) dans la zone de palier d'arbre (7).

2. Dispositif de chargement selon la revendication 1,
**caractérisé en ce**
**qu'**une profondeur (22) de la microstructure (16) s'étend le long d'une ligne structurelle (17) de manière asymétrique qui présente une composante axiale et une composante périphérique, dans lequel la composante axiale s'étend parallèlement au sens axial (8) de l'arbre (4) et la composante périphérique le long du sens périphérique (11) de l'arbre (4).

3. Dispositif de chargement selon la revendication 2,
**caractérisé en ce**
**qu'**une profondeur maximale (21) de la microstructure (16) est réalisée décalée vers l'intérieur le long de la ligne structurelle (17).

4. Dispositif de chargement selon la revendication 2 ou 3,
**caractérisé en ce**
**que** la microstructure (16) est réalisée de manière oblongue, dans lequel une longueur (18) de la microstructure (16) s'étend parallèlement au sens structurel (17).

5. Dispositif de chargement selon la revendication 4,
**caractérisé en ce**
**que** la longueur (18) présente par rapport à une largeur (19) s'étendant transversalement à la longueur (18) de la microstructure (16) un rapport entre 2:1 et 3:1.

6. Dispositif de chargement selon l'une quelconque des revendications 2 à 5,
**caractérisé en ce**
**qu'**au moins deux microstructures (16) d'une des sections extérieures (10) sont agencées de manière contigüe sur leurs extrémités longitudinales sur une telle ligne structurelle (17).

7. Dispositif de chargement selon l'une quelconque des revendications 2 à 6,
**caractérisé en ce**
**qu'**au moins une des sections extérieures (10) présente deux telles lignes structurelles (17) qui s'étendent en particulier de manière équidistante.

8. Dispositif de chargement selon l'une quelconque des revendications 2 à 7,
**caractérisé en ce**
**que** la section intérieure (12) présente au moins une telle microstructure (16) qui est agencée en particulier sur une des lignes structurelles (17) d'une des sections extérieures (10).

9. Dispositif de chargement selon l'une quelconque des revendications 2 à 8,
**caractérisé en ce**
**que** la ligne structurelle (17) de l'une section extérieure (10) présente une autre composante axiale en particulier opposée que la ligne structurelle (17) de l'autre section extérieure (10).

10. Dispositif de chargement selon l'une quelconque des revendications 6 à 9,
**caractérisé en ce**
**que** la profondeur (22), en particulier la profondeur maximale (21), de microstructures (16) contiguës le long de la ligne structurelle (17) diminue de l'intérieur vers l'extérieur.

11. Dispositif de chargement selon l'une quelconque des revendications 1 à 10,
**caractérisé en ce**
**que** la microstructure (16) est fabriquée avec un procédé laser.

12. Dispositif de chargement selon l'une quelconque des revendications 1 à 11,
**caractérisé en ce**
**que** la microstructure respective (16) présente une forme courbée ou angulaire ou trapézoïdale ou ovale.

13. Dispositif de chargement selon l'une quelconque des revendications 1 à 12,
**caractérisé en ce**
**qu'**une arête (24) de la microstructure (16) présente un chanfrein (25'), un arrondi (25") ou un biseau (25'").

14. Dispositif de chargement selon l'une quelconque des revendications 1 à 13,
**caractérisé en ce**
**que** le palier à glissement (5) présente une rainure annulaire (14) raccordée fluidiquement à l'ouverture d'écoulement (9) qui s'étend dans la zone de la section intérieure (12) dans le sens périphérique (11).
